# EUROPEAN PATENT APPLICATION

(11) **EP 2 484 893 A2**
(43) Date of publication of application: **08.08.2012**
(21) Application number: 12153431.7
(22) Date of filing: 01.02.2012
(51) Int. Cl.: F03D 1/00, F03D 1/06

(54) **Wind turbine rotor service platform**

(30) Priority: 07.02.2011 GB 201102104; 07.02.2011 US 201161440055 P
(71) Applicant: Vestas Wind Systems A/S, 8200 Aarhus N (DK)
(72) Inventor: Pettersson, Magnus, 41310 Göteborg (SE)

(57) **Abstract**

The invention relates to a wind turbine rotor having one or more wind turbine blades mounted on a rotor hub, the blades having a tip portion and a root portion; a service platform mounted on the wind turbine rotor providing access to the blade root portion of a wind turbine blade, wherein the service platform comprises: a walkway for a wind turbine service engineer.

## Description

This invention relates to wind turbines, and in particular to a wind turbine rotor having a service platform.

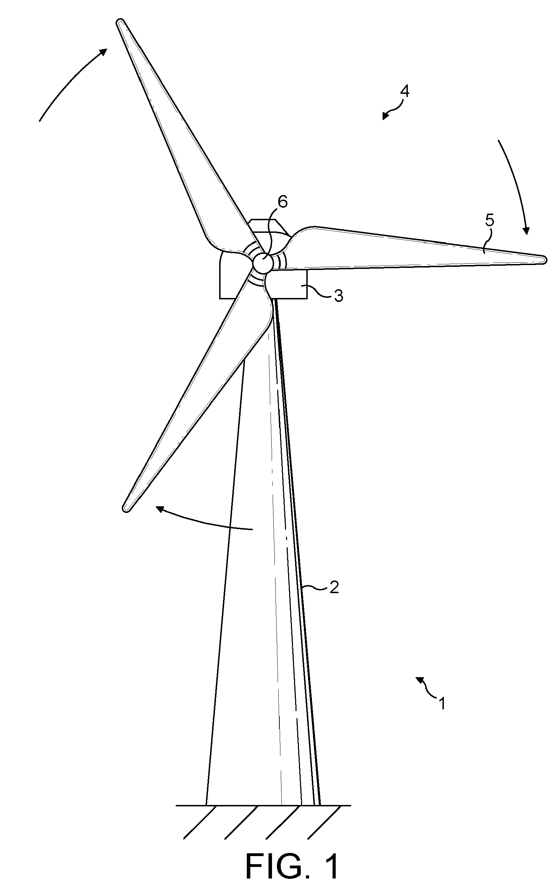

Figure 1 illustrates a wind turbine 1, comprising a tower 2 on which a nacelle 3 is mounted. At least one turbine blade 5 is mounted on a hub 6 to form a rotor 4. The hub 6 is connected to the nacelle 3 through a low speed shaft (not shown) extending from the nacelle front. The wind turbine illustrated in Figure 1 may be a large model, such as those that are suitable for use in large scale electricity generation on a wind farm. The diameter of the rotor may be as large as 150 metres or more.

Wind turbines are complex pieces of machinery, and are often operated in very hostile environments, such as coastal or offshore locations. Wind turbines are therefore prone to fatigue and wear, making wind turbine maintenance a crucial aspect of wind turbine design. Wind turbines must be checked regularly and repaired where necessary.

In view of this, it is important that the parts of a wind turbine which are prone to fatigue or wear be easily accessible for inspection and maintenance.

The connection between the hub and the blade root is an awkward area to access, but is one of the points on a wind turbine most susceptible to fatigue. The rotor forces are concentrated around the blade root and hub and through the bolts or connections attaching the blade root to the hub, and the loading is therefore considerable. Additionally, on many wind turbines, the pitch of the blade can be changed by rotating the blade root relative to the hub, adding further to the operational loads.

We have therefore appreciated that it would be desirable to allow for easier servicing of the blade root, and particularly for servicing the bolts that attach to the outer blade bearing ring between the blade and the hub.

### SUMMARY OF THE INVENTION

The invention is defined in the appended independent claims to which reference may now be made. Advantageous features of the invention are set forth in the dependent claims.

According to the invention there is provided, a wind turbine comprising: a wind turbine rotor having one or more wind turbine blades mounted on a rotor hub, the blades having a tip portion and a root portion; a service platform mounted on the wind turbine rotor providing access to the blade root portion of a wind turbine blade, wherein the service platform comprises: a walkway for a wind turbine service engineer.

The service platform provides a service engineer with easy access to the blade root portion of the blade, greatly facilitating maintenance. Further, as the service platform is mounted on the rotor hub, it remains in place for service operations, thereby removing the need to install the service platform using a crane or winch. The wind turbine may also comprise one or more access portions providing access to the walkway.

In one embodiment, the service platform is mounted on the wind turbine rotor in a position such that when the blade is in an upright position, a service engineer can stand on the walkway and have access to a blade root bearing at proximate their feet. This facilitates the use of service equipment on the service platform. Thus, when the blade is in an upright position, a service engineer can stand on the walkway, so that the service engineer's head is closer to the blade tip than the service engineer's feet.

The service platform may be mounted on the wind turbine rotor in a position such that when the blade is in an upright position, the access portion is adjacent to and aligned with the a wind turbine nacelle such that an engineer can step from the nacelle or the roof of the nacelle to the service platform using the access portion.

The wind turbine may therefore comprise a hatch granting access to the top of the nacelle from the nacelle interior. Furthermore, the wind turbine may comprise one or more of: a) a guardrail on the nacelle; b) a walkway on the nacelle; c) steps up to or down to one walkway from the nacelle. This provides a straightforward and safe access route to the service platform.

In another embodiment, the access portion comprises: an opening in the walkway service platform cooperating with an access hatch on the rotor hub or nacelle. Optionally, the service platform comprises a ladder connecting the opening in the walkway to the access hatch in the hub. This provides an access route to the service platform from the hub, or nacelle side.

The service platform is attached to the rotor hub using struts. These can connect to the rotor hub around the perimeter of the blade root bearing, or can connect to a reinforcement section provided at the centre of the rotor hub, for additional support.

The service platform is permanently and immovably attached to the rotor, and may comprise a guardrail, a safety cage. The service platform may be attached to the rotor hub, or the blade. A spinner cap may also be attached to the service platform. The service platform may extend substantially around the circumference of the blade root portion of the blade.

The wind turbine may comprise a plurality of service platforms, one attached for each respective blade root, and wherein at least one service platform is attached to at least one other service platform.

In a second aspect, the invention provides a wind turbine servicing method for servicing a wind turbine rotor blade root portion, comprising: parking a wind turbine blade in an upright position; and accessing a service platform from the nacelle or hub; wherein the service platform is mounted on a wind turbine rotor having one or more wind turbine blades mounted on a rotor hub, the blades having a tip portion and a root portion; a service platform mounted on the wind turbine rotor providing access to the blade root portion of a wind turbine blade and, wherein the service platform comprises: a walkway for a wind turbine service engineer. One or more access portions providing access to the walkway may be provided.

### BRIEF DESCRIPTION OF THE DRAWINGS

An embodiment of the invention will now be described by way of example only and with reference to the accompanying drawings in which:
Figure 1 is a front view of a horizontal axis wind turbine;
Figure 2 is a perspective view of the nacelle and hub area of a wind turbine in a first example of the invention;
Figure 3 is a perspective view of a service platform in a first example of the invention;
Figure 4 is a front view of the nacelle and hub area of a wind turbine in a first example of the invention; and
Figure 5 is a perspective view of a second example of the invention, before the blades are attached.

### DETAILED DESCRIPTION OF THE PREFERRED EMBODIMENTS

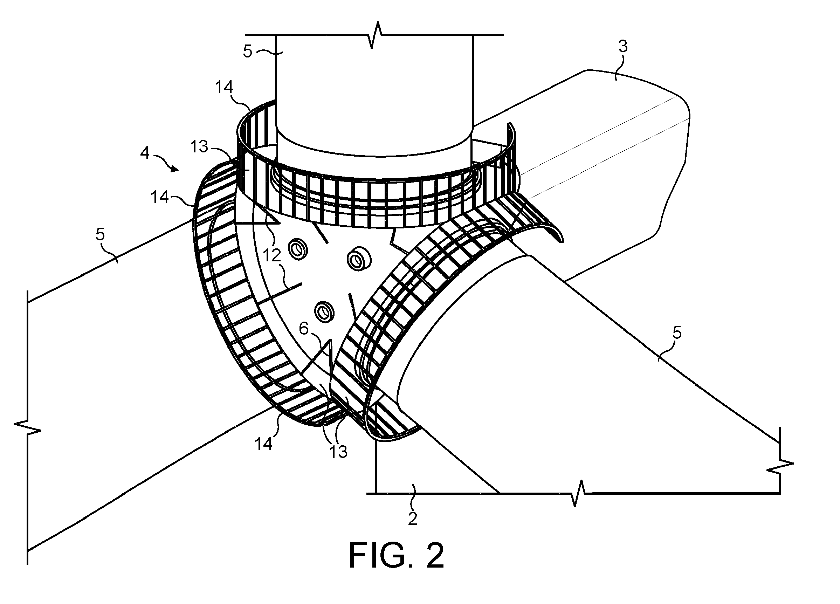

Figure 2 is a close-up perspective view of the nacelle and hub area of a wind turbine in an example embodiment of the invention. The rotor 4 comprises three wind turbine blades 5 attached to a hub 6. Only a blade root portion of each blade 5 is shown. The rotor 4 is attached to a nacelle 3, which is in turn attached to a tower 2.

Bearings (not shown) are provided at the join between the blades 5 and the hub 6 to enable rotation of the blades 5 with respect to the hub 6, thereby allowing the pitch of the blades to be adjusted. A service platform 10 is attached to the hub 6 at the base of each blade 5, by way of struts 12. The struts can be connected to the hub by fasteners or by welded joints as is known in the art. The service platform is therefore preferably permanently and immovably attached to the wind turbine hub for use.

In this example, the walkway encircles the blade root, leaving clearance for the blade root to turn for pitch control. The service platform 10 comprises a walkway 13, which is a flange extending outwards from the blade root perpendicular to the longitudinal blade axis. Also attached to the service platform are guardrails 14. The guardrails 14 are attached to the service platform 10 at its edge distal to the blade root 5. The guardrail extends along the circumference of the service platform 10, with an access portion in the guise of an optional gap in the guardrail 14 facing the nacelle 3, allowing easy access to the service platform 10 from the top of the nacelle 3. Access from an opening in the hub 6 (not shown) may alternatively or additionally be provided.

The service platform is designed to be used when the blades are in the position shown in Figure 2. That is, the blade 5 to which access is desired is parked in a vertically upright position, with the blade root substantially above the hub 6 and the service platform 10 substantially horizontal. Thus, when the blade is in an upright position, a service engineer can stand on the walkway, with the service engineer's head closer to the blade tip than the service engineer's feet, and have access to a blade root bearing proximate their feet. This facilitates the use of service equipment on the service platform.

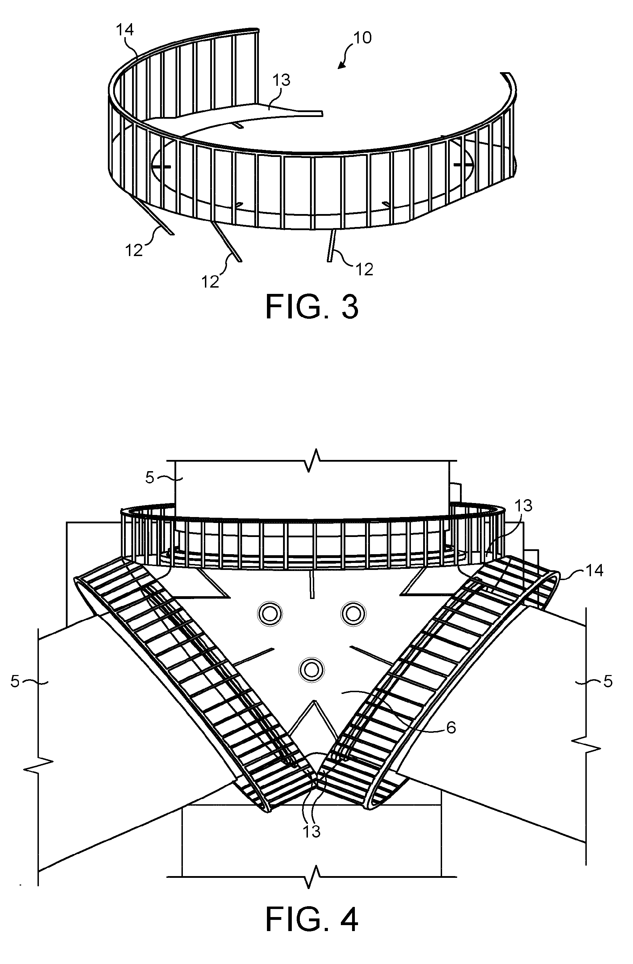

Figure 3 shows a perspective view of the service platform 10 in isolation, the reference numbering being consistent with previous figures. Figure 4 shows a front view of the nacelle and hub area of a wind turbine as shown in Figure 2.

It is feasible to provide a service platform which is designed to be used when the blade is positioned underneath the hub, but the bearings between the blade root and the hub would then be above the heads of any engineers, which would be awkward for maintenance, especially when using heavy tools. Access to the service platform would also be harder, as when in use, the platform would be parked adjacent to or below the nacelle, rather than in a position where access from the top of the nacelle is easily possible. Ease of access is important, as the tools necessary for maintenance can be very heavy and cumbersome.

It is envisaged that the service platform 10 is primarily to provide access for an engineer to perform maintenance on the bolts that attach to the outer blade bearing ring between the blade and the hub. It may be additionally or alternatively provided for other uses, for example, checking the state of repair of the outer skin of part of the blade or checking the join between the blade root and the hub.

On large wind turbines, three blade root bearings can be used for additional security and stability at the blade root. In practice, the outer and inner bearing rings attach to the hub and the middle ring (between the outer and inner rings) is attached to the blade. In one example, the service platform therefore provides access to the bolts on the outer ring bearing, while the inner and middle ring bolts on the blade and inner bearing can normally be accessed from inside the hub.

As previously mentioned, the service platform 10 is preferably accessed from the top of the nacelle via an access portion. The access to the top of the nacelle can be, for example, by means of a hatch or opening in the top of the nacelle and a ladder or one or more steps leading from the nacelle interior. Ideally, the top of the nacelle is substantially level with the service platform, allowing maintenance workers to simply step across from the nacelle to the service platform. Alternatively, a ladder or steps up to, or down to, the service platform can be provided.

A walkway or platform on the top of the nacelle can advantageously be provided, particularly if the nacelle is not of a suitable size and/or shape for walking on. Additionally or alternatively, a guardrail may be provided around part or all of a section of or the entirety of top of the nacelle.

In an example embodiment where the service platform 10 is below the level of the nacelle, a hatch or opening can be provided in the side of the nacelle proximate the hub, allowing direct access to the access portion of the service platform 10 from inside the nacelle. Alternatively, in an example embodiment where the service platform is above the level of the nacelle, steps or a ladder may lead from the top of the nacelle to a hatch or opening in the floor of the service platform. In this case, the guardrail may extend around the entire circumference of the service platform.

In the above examples, the service platform 10 is accessed from the nacelle. Alternatively however, the service platform can be accessed from a hatch or opening in the hub.

For access from the hub, a ladder or other access means could be provided between the hub access hatch and the service platform. Access from a hub access hatch could be through an opening in a guardrail or through a hatch or opening in the floor of the service platform.

In practice, it may be necessary to provide both hub and nacelle access routes to comply with safety regulations, with one being the main access route and the other being an emergency exit.

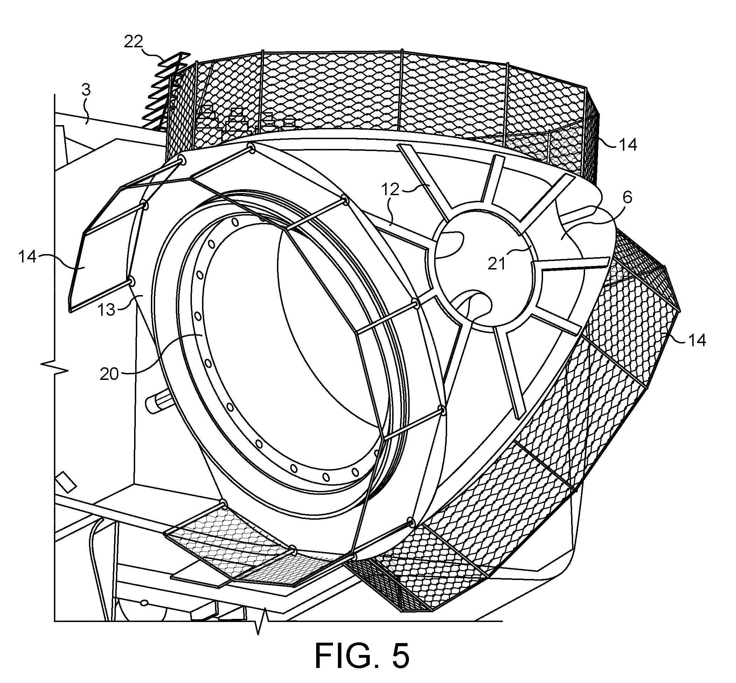

The guardrail 14 is preferably a rail arranged as shown in Figure 2, with vertical sections holding a horizontal rail in place. Many other types of guardrail or structure could alternatively be used. For example, a wire mesh could be added to help stop any smaller items from accidentally falling from the service platform, such as is shown in Figure 5. The guardrail is preferably approximately 1.1 metres above the level of the service platform, but could be at a different height. For example, the guardrail might also extend to 2 metres or more above the service platform to provide a more comprehensive safety structure or safety cage.

A solid surrounding wall could alternatively be provided, for example by way of sheet metal or window frames and windows. It may be desirable to have such a feature to isolate the platform from the weather, and a roof could additionally be provided, potentially giving an entirely enclosed platform.

In the example outlined previously, the guardrails 14 extend around the majority of the blade root circumference but do not extend around the part of the blade proximate the nacelle. The guardrails may, however, run part or all of the way around the platform. One or more gaps in the guardrail may be placed elsewhere around the circumference of the service platform, for example for an access point to the hub.

In some embodiments, guardrails may not be provided at all. If no guardrail is provided, attachment points for attaching objects (and people) to for safety may be provided. These attachment points may be provided even when a guardrail or other surrounding rail or wall is provided.

The guardrails 14 are preferably attached to the service platform 10, but may also be attached to the struts 12 holding up the service platform, or to another part of the rotor.

Where a gap in the guardrail is necessary for access, the access portion may additionally comprise a movable section of guardrail, such as a gate or door, may be provided to allow access, rather than simply providing a gap in the guardrail. The access portion could also simply be a section of guardrail which an engineer could step over or climb over. This section may be indicated as an access portion using paint or other visible markers, and may have one or more steps or hand grips to make access easier.

Where steps or a ladder are necessary for access, whether it be in the case of access from the nacelle or from the hub, the steps or ladder used for access may be removable, allowing the steps or ladder to be stored elsewhere. This has several possible benefits; firstly, it allows the steps or ladder to be stored in a sheltered place where they will be less prone to deterioration or weathering, and secondly, it removes the steps or ladder from the wind profile of the wind turbine, where they might otherwise undesirably affect the airflow around the turbine.

Guardrails may be provided around the service platform as discussed, and may additionally be provided around the top of the nacelle, and around any ladders or steps included to provide access to the service platform. Other appropriate safety structures may also be used, such as ladder cages.

A further guardrail may be provided extending from the platform in the opposite direction from the guardrail described above. This guardrail would allow access when the blade is parked pointing downwards (towards the base of the turbine), and would therefore provide additional maintenance access to other parts of the rotor. The structure and access means for when the blade is pointing downwards could be similar to those described elsewhere in the description for when the blade is pointing upwards (away from the base of the turbine).

The service platform surface may comprise an anti-slip paint or other anti-slip designed surface. Similarly, any other ladders, steps, or walkways provided may comprise such a surface.

Preferably, the service platform 10 is substantially flat. However, in some embodiments, it may be desirable that the platform slopes in some way, or is at different levels at different places around the blade. For example, there may be steps at points in the platform where the platform moves from one level to another. In a preferred embodiment, the service platform is preferably approximately 600mm or 800mm wide, but may be another width if appropriate.

In the example described above, the service platform 10 is attached to the rotor hub 6. In examples where blade pitch control is not used, and the blades 5 do not rotate with respect to the hub, the platform can alternatively be attached to the blade, or even to both the blade and the hub. The service platform is preferably attached to the hub at or near the blade bearing. The service platform may be attached directly to the rotor hub, and may alternatively or additionally be attached to struts or other supporting members or structures, these members or structures being attached to the rotor hub. In some cases, the service platform can simply be a flange attached directly to the rotor hub. In this case, the flange for the platform could be attached between the hub and the outer bearing ring , or alternatively on the same machine surface on the hub as the outer bearing ring, but outside the circumference of the bearing.

An embodiment of the invention is shown in Figure 5. The hub 6 is shown without blades attached. Three service platforms, with walkways 13 and guardrails 14, are attached to the hub proximate a blade bearing ring 20. The service platforms are attached to the rotor hub by struts 12. The struts 12 are attached to one another by a support ring 21, to provide extra structural support. A ladder 22 is also attached to the nacelle 3, in this case to gain access to the service platform by going over the guardrail 14. A second ladder could be added on the walkway side of the guardrail for ease of access.

Where two or more service platforms are provided, the service platforms may also be attached to each other, directly or indirectly, as illustrated in Figure 4. This may provide additional structural strength and stability.

A spinner cap may additionally be attached to the rotor. The spinner cap fits over the hub and may be attached to the service platform.

The wind turbine preferably has at least one rotatably adjustable blade, but may also be a fixed blade turbine. The exemplary wind turbine described above comprises three wind turbine blades. However, one, two or more blades may be provided, with some or all of these blades having their own service platform.

Various modifications to the embodiments described are possible and will occur to those skilled in the art without departing from the invention which is defined by the following claims.

## Claims

1. A wind turbine comprising:
a wind turbine rotor having one or more wind turbine blades mounted on a rotor hub, the one or more blades having a tip portion and a root portion;
a service platform permanently and immovably mounted on the outside of the wind turbine rotor providing access to the root portion of a wind turbine blade, wherein the service platform comprises a walkway for a wind turbine service engineer.

2. The wind turbine of claim 1, wherein the service platform is mounted on the wind turbine rotor in a position such that when the blade is in an upright position, a service engineer can stand on the walkway and have access to a blade root bearing proximate their feet.

3. The wind turbine of claim 1 or 2, wherein the service platform is mounted on the wind turbine rotor such that, when the blade is in an upright position, a service engineer can stand on the walkway, whereby the service engineer's head is closer to the blade tip than the service engineer's feet.

4. The wind turbine of claim 1, 2 or 3, wherein the service platform comprises one or more access portions providing access to the walkway.

5. The wind turbine of claim 4, wherein the service platform is mounted on the wind turbine rotor in a position such that when the blade is in an upright position, the access portion is adjacent to and aligned with a wind turbine nacelle such that an engineer can step from the nacelle to the service platform using the access portion.

6. The wind turbine of claim 5, comprising a hatch granting access to the roof of the nacelle from the nacelle interior.

7. The wind turbine of claim 6, comprising one or more of:
a) a guardrail on the nacelle;
b) a walkway on the nacelle;
c) steps up to or down to the walkway of the service platform from the roof of the nacelle.

8. The wind turbine of any of claims 4 to 7, wherein the access portion comprises: an opening in the service platform cooperating with an access hatch on the rotor hub or nacelle.

9. The wind turbine of claim 8, wherein the service platform comprises a ladder connecting the walkway to the access hatch in the hub.

10. The wind turbine of any preceding claim, wherein the service platform is attached to the rotor hub.

11. The wind turbine of any claim 10, wherein the service platform is attached to the rotor hub using struts.

12. The wind turbine of claim 11, wherein the struts connect to the rotor hub around the perimeter of the blade root bearing.

13. The wind turbine of claim 11, wherein the struts connect to a reinforcement section provided at the centre of the rotor hub.

14. The wind turbine of any preceding claim, wherein the service platform comprises a guardrail.

15. The wind turbine of any preceding claim, wherein the service platform comprises a safety cage.

16. The wind turbine of any preceding claim, wherein the service platform is attached to the blade.

17. The wind turbine of any preceding claim, wherein the service platform extends substantially around the circumference of the blade root portion of the blade.

18. The wind turbine of any preceding claim comprising a plurality of service platforms, one attached for each respective blade root, and wherein at least one service platform is attached to at least one other service platform.

19. A wind turbine servicing method for servicing a wind turbine rotor blade root portion, comprising:
parking a wind turbine blade in an upright position; and
accessing a service platform from the nacelle or hub;
wherein the service platform is mounted on a wind turbine rotor having one or more wind turbine blades mounted on a rotor hub, the blades having a blade tip portion and a blade root portion; and wherein the service platform comprises: a walkway for a wind turbine service engineer.

20. The wind turbine of claim 19, wherein the service platform is mounted on the wind turbine rotor in a position such that when the blade is in an upright position, a service engineer can stand on the walkway and have access to a blade root bearing proximate their feet.

21. The wind turbine of claim 19 or 20, wherein the service platform is mounted on the wind turbine rotor such that, when the blade is in an upright position, a service engineer can stand on the walkway, whereby the service engineer's head is closer to the blade tip than the service engineer's feet.

22. The method of any of claims 19 to 21, wherein the service platform is accessed from inside the hub.

23. The method of any of claims 19 to 21, wherein the service platform is accessed from the roof of the nacelle.

24. A wind turbine substantially as described herein and with reference to Figures 2 to 5 of the drawings.

25. A wind turbine servicing method substantially as described herein and with reference to Figures 2 to 5 of the drawings.
